# EUROPEAN PATENT APPLICATION

(11) **EP 4 481 726 A1**
(43) Date of publication of application: **25.12.2024**
(21) Application number: 24178340.6
(22) Date of filing: 28.05.2024
(51) Int. Cl.: G10L 15/22, B60R 16/037, G06F 3/16

(54) **SELECTIVE DISREGARD OF SPEECH BY AN AUTOMOTIVE ASSISTANT**

(30) Priority: 22.06.2023 US 202363522464 P
(71) Applicant: Cerence Operating Company, Burlington, MA 01803 (US)
(72) Inventor: FUNK, Markus, Burlington, MA 01803 (US); RUBIN, Brian, Burlington, MA 01803 (US)
(74) Representative: Taruttis, Tilman

(57) **Abstract**

A method comprising causing an automotive assistant in a vehicle to disregard an utterance made by an occupant of that vehicle based on a sightline of the occupant.

## Description

### Background

In a modern vehicle, it is not uncommon to have an automotive assistant with a speech interface. In response to an utterance by an occupant of the vehicle, the automotive assistant can answer certain questions or carry out certain instructions.

To use the automotive assistant, one typically awakens it in some way. This can be carried out by the push of a button. Alternatively, it can be carried out by uttering a special word, referred do as a "wake word."

A newer generation of automotive assistants dispenses with this step. In such cases, one can address the automotive assistant in much the same way one might address a person. Thus, one can simply utter a question and expect the automotive assistant to respond.

### Summary

The invention attempts to assist the automotive assistant with distinguishing between those utterances that are directed to another entity and those that are not. To do so, the invention relies on the observation that a human who wishes an utterance to be directed to a target entity will often look towards the target entity.

In one aspect, the invention includes causing an automotive assistant in a vehicle to disregard a first utterance, the first utterance having been made by a first occupant in the vehicle. In such a method, causing the automotive assistant to disregard the first utterance includes receiving the first utterance, determining a first sightline of the first occupant, and based at least in part on the first sightline, causing the automotive assistant to disregard the first utterance.

Among the practices are those that further include causing the automotive assistant to respond to a second utterance. In such practices, causing the automotive assistant to respond to the second utterance includes receiving, from a second occupant of the vehicle, the second utterance, determining a sightline of the second occupant, and based at least in part on the sightline of the second occupant, causing the automotive assistant to respond to the second utterance.

In still other practices, the method further includes causing the automotive assistant to respond to a second utterance and doing to by receiving the second utterance from the first occupant, determining a second sightline of the first occupant, and based at least in part on the second sightline, causing the automotive assistant to respond to the second utterance.

Still other practices include those in which the method includes determining that the first sightline fails to intersect an ocular zone that has been defined for the automotive assistant for use by the first occupant of the vehicle and, based at least in part on the sightline having failed to intersect the ocular zone, causing the automotive assistant to disregard the first utterance.

In other practices, the method further includes causing the automotive assistant to respond to a second utterance by receiving the second utterance, determining a second sightline, the second sightline being a sightline of whomever made the second utterance, determining that the second sightline intersects an ocular zone designated for whomever made the second utterance, and, based at least in part on the sightline having intersected the ocular zone, causing the automotive assistant to respond to the second utterance.

In another aspect, the invention features an apparatus that includes an automotive assistant and a speech filter that causes the automotive assistant to disregard an utterance from an occupant based on the occupant's sightline.

Among the embodiments are those in which the speech filter includes a sightline detector that determines whether the occupant's sightline intersects an ocular zone that has been defined for use by the occupant when addressing the automotive assistant.

Also among the embodiments are those in which the speech filter includes a logic circuit that receives a signal indicating an utterance and a signal indicating whether or not a sightline of an occupant who made the utterance intersects an ocular zone of the automotive assistant.

In all the foregoing cases, the method steps are performed in a non-abstract manner and all apparatus components are non-abstract in nature. As used herein, "non-abstract" shall mean the converse of "abstract" as that term has been defined by the courts of the United States as of the filing date of this application. Abstract implementations and practices are hereby disclaimed. Also disclaimed are practices in which a human being carries out the method unaided using a writing implement and a substrate upon which to write. Any person who interprets the claims to the contrary will be proving that it is possible to interpret the claims without regard to the specification and in derogation of Applicant's right to act as his own lexicographer.

These and other features of the invention will be apparent from the following detailed description and the accompanying figures, in which:

### Description of Drawings

FIG. 1 shows a vehicle cabin equipped with a speech filter.
FIG. 2 shows an interior view of the vehicle cabin in FIG. 1 with the occupant looking at an ocular zone.
FIG. 3 shows the configuration of FIG. 2 but with the occupant instead looking away from the occupant zone.
FIG. 4 shows an exemplary architecture for the speech filter shown in FIG. 1.
FIG. 5 shows a flowchart of one implementation for disregarding an utterance made by an occupant of that vehicle based on a sightline of the occupant.

### Detailed Description

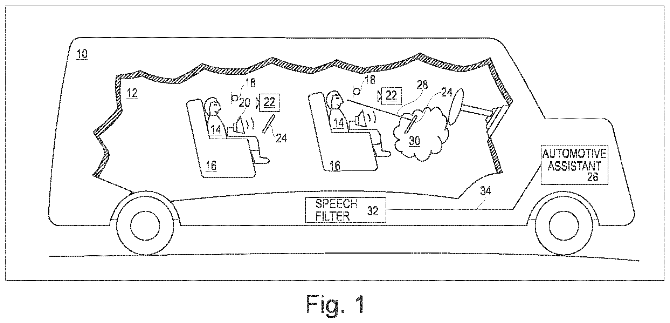

FIG. 1 shows a vehicle 10 having a passenger cabin 12 in which occupants 14 sit in seats 16. Each seat 16 has an associated microphone 18, a speaker 20, a camera 22, and a display 24.

The vehicle further includes an automotive assistant 26. In response to a spoken utterance from an occupant 14, the automotive assistant 26 carries out various tasks.

In some embodiments, the automotive assistant 26 is one that dispenses with the need for a wake word. This allows a vehicle's occupant 14 to interact with the automotive assistant 26 in much the same way as that occupant 14 might interact with another occupant.

The foregoing feature is useful when only one occupant 14 is in the vehicle 10. In such a case, the automotive assistant 26 faces little ambiguity in determining whether it is being addressed.

When multiple occupants 14 are present, conversation between them may occur. Although the automotive assistant 26 can detect the resulting speech, it has no good basis for determining when it is being addressed. As a result, the automotive assistant 26 may find itself barging into a conversation that it has no business participating in. This can occur even if only one occupant 14 is present. For example, when an occupant 14 is using the telephone, the voice assistant 26 may still misinterpret the occupant's speech as an instruction to be carried out.

To address this difficulty, the automotive assistant 26 attempts to adopt the human practice of using eye contact to determine if it is being addressed and therefore expected to respond to a particular utterance. This, of course, is not literally possible. After all, the automotive assistant 26 lacks eyes with which to make contact.

Nevertheless, it is possible to designate an "ocular volume 30" to enable the automotive assistant 26 to simulate something akin to eye contact. The automotive assistant 26 is configured to respond to an occupant's utterance only if that occupant 14 has a sightline 28 that intersects the ocular volume 30 during a time interval that is contemporaneous with the utterance.

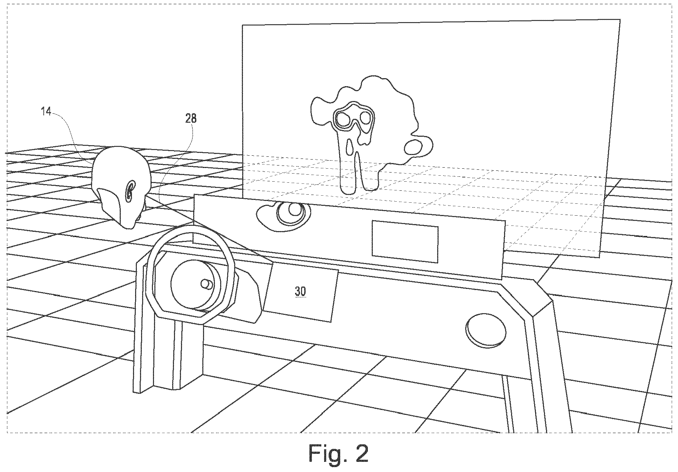

FIG. 2 shows a case in which the occupant's sightline 28 intersects the ocular volume 30. In this case, the occupant's utterances would be accepted by the automotive assistant 26.

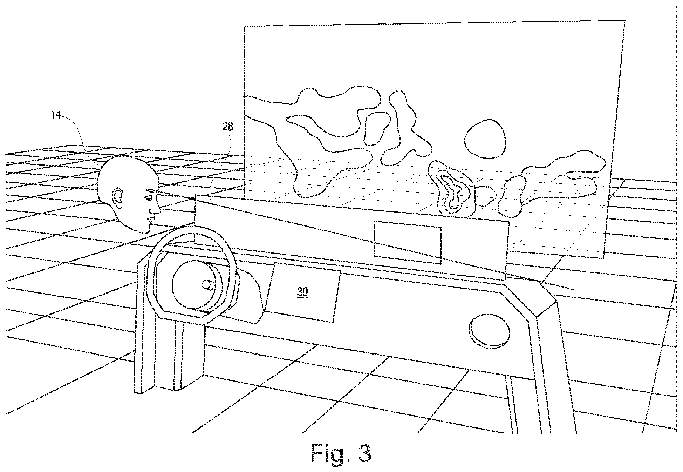

In contrast, FIG. 3 shows a case in which the occupant's sightline 28 misses the ocular volume 30. Accordingly, the automotive assistant 26 would infer that the occupant 14 is addressing someone else. Having done so, the automotive assistant 14 would disregard the occupant's utterance.

As a practical matter, different occupants 14 have different ocular volumes 30. After all, an occupant 14 seated in the vehicle's back seat would find it inconvenient to use an ocular volume 30 that is at the opposite end of the vehicle's cabin 12.

A useful place for a particular occupant's ocular volume 30 is slightly below or to one side of a sightline 28 that looks outside the vehicle 12, as shown in FIGS. 2 and 3. Embodiments also include those in which the ocular volume 30 is coextensive with the microphone 18 located at the occupant's seat 16 or coextensive with the display 24 nearest to the occupant's seat 16. Other useful places for positing an ocular volume 30 can be determined experimentally through careful observation of interactions of occupants 14 in a vehicle 12.

In general, there is no requirement that the ocular volume 30 be continuous. Thus, in some embodiments, the ocular volume 30 is formed by a union of first and second volumes, the first volume being coextensive with the seat's display 24 and the second volume being coextensive with the seat's microphone 18.

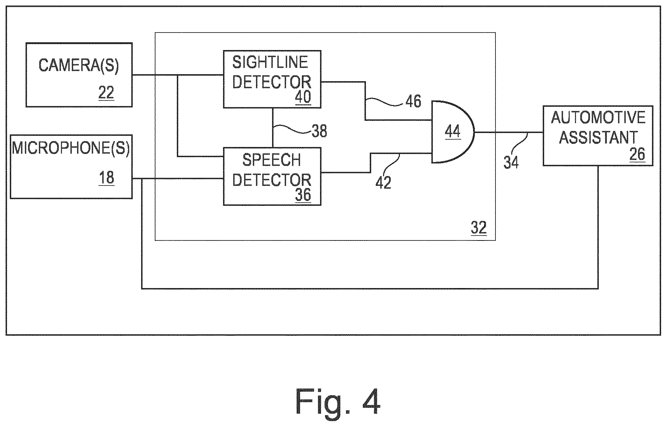

Referring now to FIGS. 1 and 4, the aforementioned configuration of the automotive assistant 26 results from a speech filter 32 that stands between the automotive assistant 26 and the microphones 18. The speech filter 32 sends a trigger 34 to the automotive assistant 26 only when there exists a high probability that an occupant 14 is addressing the automotive assistant 26. As used herein, "high probability" means that an occupant 14 is exhibiting first and second properties.

The first property is that the occupant 14 has made an utterance. To detect that this is the case, the speech filter 32 includes a speech detector 36 that receives signals from the microphones 18. Based on these signals, the speech detector 36 determines if an utterance has taken place and which microphone 18 is associated with the strongest speech signal. This provides a basis for inferring the location of the occupant 14 who is speaking.

Upon detecting speech, the speech detector 36 provides a speaker signal 38 to a sightline detector 40. The speaker signal 38 indicates that an occupant 14 has made an utterance. It also identifies the microphone 18 that is believed to be closest to that occupant 14.

The speech detector 36 also sends an arming signal 42 to a logic circuit 44. As a result of the arming signal 42, the logic circuit 44 stands ready to send the trigger 34 should the sightline detector 40 determine that the sightline 28 passes through the ocular volume 30.

Based on the speaker signal 38, the sightline detector 40 attempts to determine the existence of the second of the aforementioned two properties, namely whether the occupant 14 who is speaking has a sightline 28 that intersects or passes through that occupant's ocular volume 30. To do so, the sightline detector 40 observes the output of whichever camera 22 is best positioned to evaluate that occupant's sightline 28. Based on that output, the sightline detector 40 determines whether that occupant's sightline 28 intersects the ocular volume 30.

If the sightline detector 40 determines that the second property exists, it sends a firing signal 46 to the logic circuit 44. This causes the logic circuit 44 to send the trigger 34 to the automotive assistant 26, which then proceeds to respond to the occupant 14 who is addressing it.

While it is perhaps non-obvious, the speech filter 32 is not a conventional filter that removes particular frequency components from a speech signal's frequency-domain representation. Instead, the illustrated speech filter 32 filters the ambient sonic environment so as to detect a signal that has the properties of a human utterance.

In some embodiments, the speech filter 32 omits the logic circuit 44. Instead, the automotive assistant 26 responds to an occupant's utterances as long as an occupant 14 is looking towards an ocular volume 28. If nobody is actually speaking, there will be nothing for the automotive assistant 26 to respond to. If an occupant 14 makes an utterance while looking away from the ocular volume 28, the automotive assistant 26 will not respond to that utterance.

Embodiments of the sightline detector 30 include those that incorporate a machine vision system that detects the location of a feature in an occupant's eye and tracks the location of that feature, thereby inferring a sightline 28. A suitable feature in such cases is the occupant's pupil.

Also, among the embodiments of the sightline detector 30 are those that illuminate an occupant's eye with electromagnetic radiation outside the visible range and then observe the position of the reflection as a basis for inferring that occupant's sightline 28.

A typical occupant 14 has a face vector and an eye vector. The face vector is perpendicular to the face whereas the eye vector is perpendicular to a plane defined by an eye's pupil.

It is possible to use different methods to control one's sightline 28. One method is to turn one's head, i.e., to change the face vector's direction. This method achieves a more dramatic and unmistakable effect. Another method is the more subtle one of swiveling one's eyes about their respective sockets, thereby changing the direction of their eye vector. This is useful if, for example, one is driving and seeks to establish eye contact through the briefest of glances. Yet another method, which requires more effort, is to maintain one's sightline 28 by rotating one's face vector and eye vector in opposite directions. A suitable sightline detector 30 is one that accommodates these various maneuvers of the face vector and the eye vector to correctly determine a sightline 28.

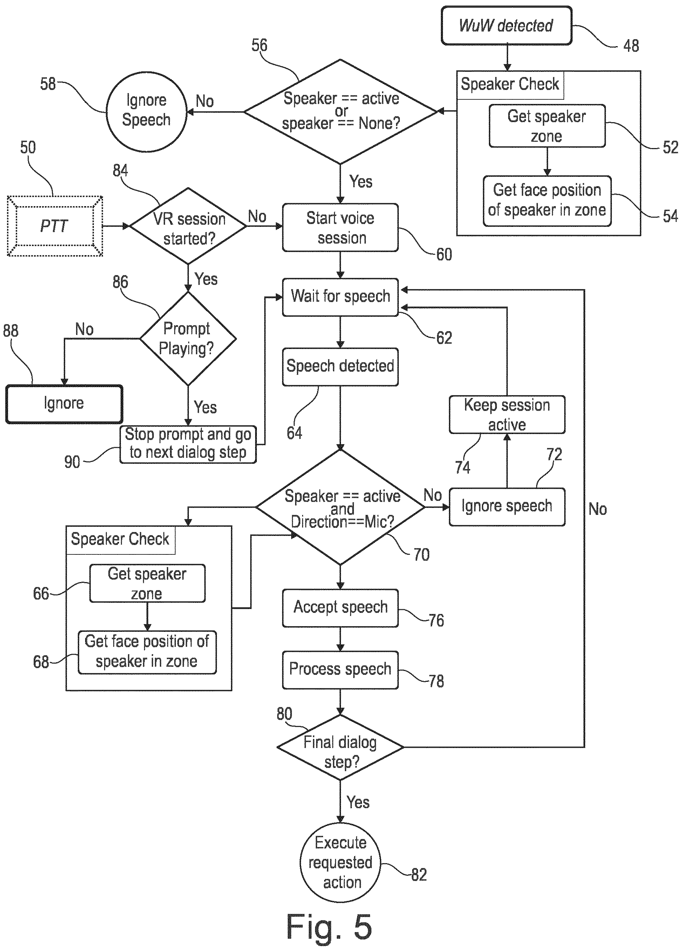

FIG. 5 shows a flowchart of an implementation having two entry points: a wake word entry (step 48) that follows detection of a wake word and a push-to-talk entry (step 50) that follows the use of a push-to-talk button.

Upon the detection of a wake word (step 48), the speech filter 32 determines the location within the vehicle 10 of the occupant 14 who uttered the wake word (step 52). The speech filter 32 then determines the speaker's sightline 28 (step 54) and, based at least in part on the sightline 28, the speech filter 32 determines if the speech is likely to have been directed at the automotive assistant (step 56). If this is unlikely, the automotive assistant 26 disregards the speech (step 58). Otherwise, the automotive assistant 26 begins a voice session (step 60).

As used herein, speech is likely to have been directed at the automotive assistant 26 if, for a pre-selected threshold in the interval defined by zero and one inclusive, the probability that the speech was directed to the automotive assistant 26 is in excess of that threshold. As used herein, speech is considered to be unlikely to have been intended for the automotive assistant 26 if it is not likely to have been intended for the automotive assistant 26.

The voice session includes waiting for speech (step 62) and, upon detection of speech (step 64), determining both the speaker's location within the vehicle is determined (step 66) and the speaker's sightline 28 (step 68).

The speech filter 32 determines if the speech is likely to have been directed at the automotive assistant (step 70). If this turns out to have been unlikely, the automotive assistant 26 disregards speech (step 72) but without closing the voice session (step 74). Otherwise, the automotive assistant accepts the speech (step 76) and processes it (step 78). If the automotive assistant 26 determines that no further information is required (step 80), then the requested action is executed (step 82). Otherwise, the automotive assistant 26 awaits further speech (step 62).

In one example, an occupant 14 looks at his designated ocular volume 30 and asks, "Are there any restaurants nearby?" The automotive assistant 26, having recognized that it is being addressed, replies, "Yes, here is a list of restaurants. The first is an Etruscan restaurant half a mile away. The second is... " and begin to enumerate a list.

Three scenarios are likely at this point.

In the first scenario, the occupant 14, who has a special fondness for Etruscan cuisine, looks at his designated ocular volume 30 and says, "I'd like to go to the Etruscan place." The automotive assistant 26, recognizing that it is again being addressed, interrupts its delivery and replies, "OK, I will plot a course for the Etruscan restaurant."

In the second, the occupant 14 is in the company of another occupant. Recognizing that perhaps not all share his fondness for Etruscan cuisine, the occupant 14 looks away from his ocular zone 30 and asks, "Do you like Etruscan cuisine?" The automotive assistant detects this change in the occupant's sightline 28 and infers that it is no longer being addressed. Accordingly, it does not attempt to answer this question.

The third scenario proceeds like the second except that the occupant 14 does not take his eyes off the road. As a result, the sightline 28 may graze the ocular volume 30. In such a case, the automotive assistant 26 recognizes an ambiguity and seeks clarification, perhaps by asking, "Pardon me. Were you perchance speaking to me?"

Upon detection of the push-to-talk button having been actuated (step 50), the automotive assistant 26 determines whether a voice recognition session has begun (step 84). If not, it starts one (step 60). Control flow then proceeds as discussed above.

In some cases, an occupant 14 barges in while the automotive assistant 26 is in the middle of saying something, i.e., playing a prompt (step 86). For example, as noted above in the three scenarios, after having been asked for a list of nearby restaurants, the automotive assistant 26 may be in the middle of reciting a lengthy list of such restaurants.

In such cases, it is useful to determine whether or not that occupant's utterance was an attempt to address the automotive assistant 26. If it was not such an attempt, the automotive assistant 26 disregards that utterance (step 88) and continues its prompt. On the other hand, if, as a result of having observed a sightline 28, the speech filter 32 recognizes the utterance as an attempt to address the automotive assistant 26, the automotive assistant 26 interrupts its prompt (step 90) and proceeds to wait for speech (step 62). At this point, control flow proceeds as already discussed.

Having described the invention and a preferred embodiment thereof, what is claimed as new and secured by letters patent is:

## Claims

1. A method comprising causing an automotive assistant (26) in a vehicle (10) to disregard a first utterance, said first utterance having been made by a first occupant (14) in said vehicle, **characterized in that** causing said automotive assistant to disregard said first utterance comprises
receiving said first utterance,
determining a first sightline (28) of said first occupant, and
based at least in part on said first sightline, causing said automotive assistant to disregard said first utterance.

2. The method of claim **1,** further comprising causing said automotive assistant to respond to a second utterance, **characterized in that** causing said automotive assistant to respond to said second utterance comprises
receiving, from a second occupant of said vehicle, said second utterance,
determining a sightline of said second occupant, and
based at least in part on said sightline of said second occupant, causing said automotive assistant to respond to said second utterance.

3. The method of claim **1,** further comprising causing said automotive assistant to respond to a second utterance, **characterized in that** causing said automotive assistant to respond to said second utterance comprises
receiving said second utterance from said first occupant,
determining a second sightline of said first occupant, and
based at least in part on said second sightline, causing said automotive assistant to respond to said second utterance.

4. The method of claim **1, characterized in that** said method further comprises further comprising determining that said first sightline fails to intersect an ocular zone (30) that has been defined for said automotive assistant for use by said first occupant of said vehicle and, based at least in part on said sightline having failed to intersect said ocular zone, causing said automotive assistant to disregard said first utterance.

5. The method of claim 1, further comprising causing said automotive assistant to respond to a second utterance, **characterized in that** causing said automotive assistant to respond to said second utterance comprises receiving said second utterance, determining a second sightline, said second sightline being a sightline of whomever made said second utterance, determining that said second sightline intersects an ocular zone designated for whomever made said second utterance, and, based at least in part on said sightline having intersected said ocular zone, causing said automotive assistant to respond to said second utterance.

6. An apparatus comprising
an automotive assistant (26) and
a speech filter (32), **characterized in that** said speech filter causes said automotive assistant to disregard an utterance from an occupant (14) based on said occupant's sightline.

7. The apparatus of claim **6, characterized in that** said speech filter comprises a sightline detector (40) that determines whether said occupant's sightline intersects an ocular zone that has been defined for use by said occupant when addressing said automotive assistant.

8. The apparatus of claim **6, characterized in that** said speech filter comprises a logic circuit (44) that receives a signal indicating an utterance and a signal indicating whether or not a sightline of an occupant who made said utterance intersects an ocular zone of said automotive assistant.

9. The apparatus of claim **6, characterized in that** said speech filter comprises a speech detector (36), a sightline detector (40), and a logic circuit (44), wherein said speech detector transmits an arming signal (42) to said logic circuit upon having detected an utterance by said occupant, wherein said sightline detector sends a firing signal (46) in response to having determined that said occupant's sightline has intersected an ocular volume (30), wherein said logic circuit sends a trigger (34) to said automotive assistant upon detecting both said firing signal and said arming signal, and wherein said automotive assistant interacts with said occupant in response to said trigger signal.

10. The apparatus of claim **6, 7,** or **8, characterized in that** said speech filter filters an ambient sonic environment of a microphone (18) in a vehicle so as to detect a signal that has properties of a human utterance.

11. The apparatus of claim **6, 7,** or **8, characterized in that** said speech filter comprises a sightline detector (40) that sends a signal to said automotive assistant that indicates that said occupant's sightline intersects an ocular zone that has been defined for use by said occupant when addressing said automotive assistant and wherein said automotive assistant is configured to interacts with said occupant in response to receiving said signal from said sightline detector and detecting an utterance from said user.

12. The apparatus of claim **6, 7,** or **8,** wherein said occupant is one of a plurality of occupants in a vehicle, wherein said plurality of occupants comprises a first occupant and a second occupant, wherein a first ocular zone is assigned to said first occupant, wherein a second ocular zone is assigned to said second occupant, wherein said speech filter is configured to detect a first utterance, which is made by said first occupant, and a second utterance, which is made by said second occupant, and to cause said automotive assistant to disregard said first utterance and to respond to said second utterance, wherein at the time of said first utterance, a sightline of said first occupant misses said first ocular zone, and wherein, at the time of said second utterance, a sightline of said second occupant intersects said second ocular zone.

13. The apparatus of claim **6, 7,** or **8, characterized in that** said speech filter is configured to disregard said utterance when said occupant's sightline fails to intersect an ocular volume that has been designated for said occupant.

14. The apparatus of claim **6, 7,** or **8,** further comprising a microphone, **characterized in that** said speech filter is configured to disregard said utterance when said occupant's sightline fails to intersect a volume that is coextensive with said microphone.

15. The apparatus of claim **6, 7,** or **8,** further comprising a display (24), **characterized in that** said speech filter is configured to disregard said utterance when said occupant's sightline fails to intersect said display.
